# EUROPEAN PATENT APPLICATION

(11) **EP 1 879 125 A2**
(43) Date of publication of application: **16.01.2008**
(21) Application number: 07252004.2
(22) Date of filing: 16.05.2007
(51) Int. Cl.: G06F 21/00

(54) **Program execution control circuit, computer system, and IC card**

(30) Priority: 28.06.2006 JP 2006178655
(71) Applicant: Sharp Kabushiki Kaisha, Osaka-shi, Osaka 545-8522 (JP)
(72) Inventor: Ogawa, Ryuichi, Ichihara-shi, Chiba 290-0056 (JP)
(74) Representative: Brown, Kenneth Richard

(57) **Abstract**

A computer system prevents an illegal program transmitted from an external communication device to a computer system such as IC cards and stored therein from being executed. The system comprises a CPU (3), a communication circuit (4), a first memory area (5) storing a first and second computer program, a second memory area (6) including storage areas for the first computer program, for data received by the communication circuit, for data used in program execution of the CPU. When a program to be executed by the CPU is the first computer program, if the program code is stored in the first memory area (5) or a storage area for the first computer program in the second memory area (6), the program is allowed to be executed, and if the program code is stored in the second memory area (6) other than the storage area for the first computer program, the program is not allowed to be executed.

## Description

### BACKGROUND OF THE INVENTION

### 1. Field of the Invention

The present invention relates to a computer system such as an IC card having a communication interface to an external connection device and more particularly, to a program execution control circuit for controlling the execution of a program code in a volatile memory of the IC card in order to prevent the data in the IC card from being altered or read illegally by illegally executing command data received from the external connection device into the volatile memory as a malicious program code.

### 2. Description of the Related Art

Since an IC card comprising an IC chip provided with a CPU (Central Processing Unit), a nonvolatile memory, a volatile memory and the like in a plastic card can store larger quantities of data and superior in security as compared with a magnetic card used widely, it is becoming widespread.

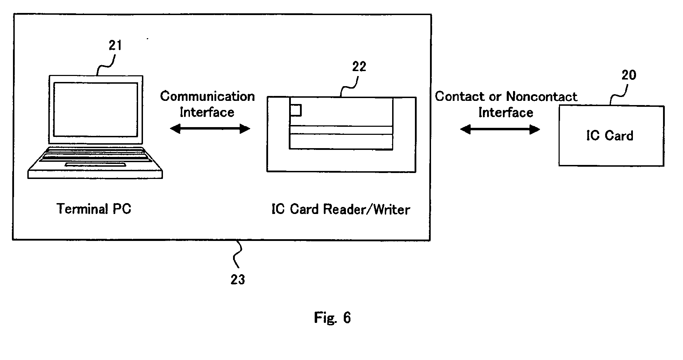

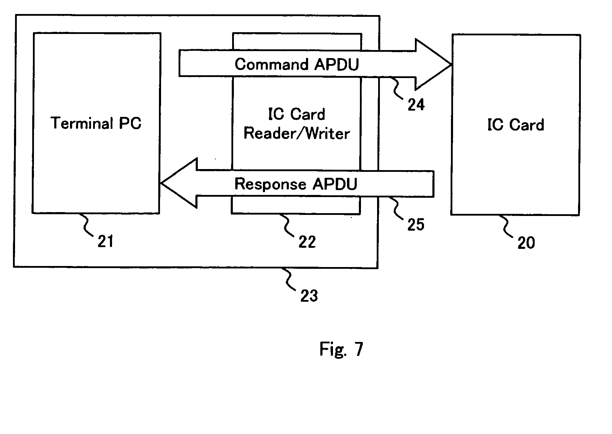

As shown in Figs. 6 and 7, the IC card performs basic operations such that it receives a command APDU (Application Data Unit) 24 transmitted from an external connection device 23 comprising a terminal PC 21 and an IC card reader/writer 22 (R/W) and determines the contents of the command in the IC card 20, performs the process corresponding to the command contents in the IC card 20, and returns its processed result to the external connection device 23 as a response APDU 25.

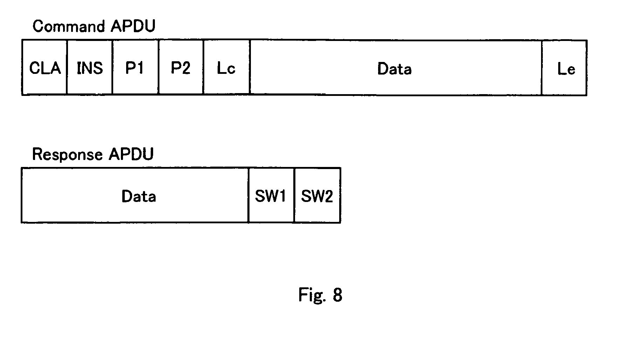

The format of the command APDU transmitted from the external connection device is defined in ISO/IEC7816-4 that is an International Standard of the IC card as shown in Fig. 8. The four bytes of CLA, INS, P1 and P2 shown in Fig. 8 are called a command header that represents the kind of the process for the IC card. The CLA is data for defining an application, the INS is an instruction code, and the P1 and P2 are parameters of the command APDU. In addition, Lc, Data and Le are a command body and include process information of the command. The Lc designates a data length, the Data designates a data field, and the Le designates a data length of the response APDU returned from the IC card. SW1 and SW2 of the response APDU are status information on the IC card.

For example, a command for programming information on the IC card is transmitted from the external connection device to the IC card after an IC card program command has been stored in the command header and program data has been stored in the command body of the command APDU. The IC card examines the command header of the received command APDU and when it determines the command as the program command, it programs the information of the command body of the command APDU in the IC card and transmits its result to the external connection device as the response APDU having the format shown in Fig. 8.

The data received by the IC card as the command APDU is stored in a receiving buffer in a volatile memory (RAM) used by an application program of the IC card in general.

The CPU of the IC card executes the program code stored in the nonvolatile memory. In addition, it may store data in the volatile memory previously and can execute the data as the program code. That is, the command APDU stored in the receiving buffer can be executed as the program code.

The command data of the IC card should be correctly contained in the command APDU transmitted from the external connection device to the IC card. However, not the original command data but the program code can be contained in the command APDU. The program code contained in the command APDU can be stored in the receiving buffer and the CPU of the IC card can execute the program code.

The CPU of the IC card contains a program counter specifying the address of the program code to be executed and a program counter value is added every execution of the program code, for example.

In the process of the IC card in a normal state, it is not very likely that the address of the receiving buffer in the volatile memory is set to the program counter and the data in the receiving buffer is executed as the program code.

However, when the program counter is operated by an external attack and the address of the receiving buffer is set in the program counter, the command data in the receiving buffer could be executed as the program code.

When a malicious attacker transmits the command APDU containing a malicious program code to the IC card, stores the illegal program code in the receiving buffer in the volatile memory of the IC card and succeeds in setting the program counter at the address of the receiving buffer, the illegal program code is executed and the internal data of the IC card could be read or altered.

As a method for operating the program counter, a method in which the CPU is made to run away by some noise applied to the CPU of the IC card and the program counter is moved to an address different from the address for the original execution is considered.

As a method for preventing an illegal program transmitted from the external connection device to the volatile memory of the IC card and stored therein, from being executed, a method is disclosed in Japanese Patent Application Laid-Open No. 2000-222202. According to the Japanese Patent Application Laid-Open No. 2000-222202, a security attack from the outside is prevented by converting a malicious program code incorporated in data transmitted from an eternal source to an inexecutable state and storing it in a memory and when the data stored in the memory is to be used, it is reversely converted. In this way, the data from the external source is stored such that the computer system cannot execute it, whereby the malicious code contained in the data can be prevented from being executed.

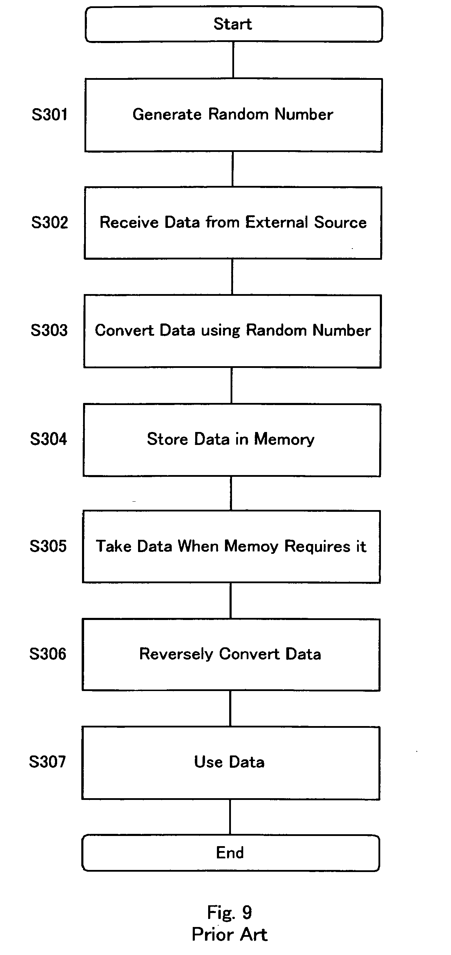

This conventional method will be described with reference to a flowchart shown in Fig. 9. First, a random number is generated at step 5301. Then, data is received from an external source at step S302. At step S303, the data received at the step S302 is converted using the random number generated at the step S301 and the converted data is stored in a memory at step S304. Here, it is to be noted that the data stored in the memory cannot be executed by a computer system. At step S305, the data is taken out when the memory requires it. At step S306, the data taken out at the step S305 is reversely converted and returned to the original data. At step S307, the reversely converted data is used.

However, according to the conventional method disclosed in the Japanese Patent Application Laid-Open No. 2000-222202, since it is necessary to convert and reversely convert the received data, it takes time when high level of conversion is used and real-time characteristics is damaged. In addition, when the data reversely converted and returned to the original data exists in the memory, the malicious code incorporated in the data could be executed by an attack from the outside at that time.

In addition, a system program (OS: Operating System) and application programs corresponding to various kinds of services are mounted in a nonvolatile memory of the IC card in general. Meanwhile, the volatile memory (RAM) is used as an operation area for each program.

During the execution of the system program, the program code of the system program is not always executed from the nonvolatile memory in which the program is stored. That is, the program code for programming data in the nonvolatile memory or updating it or the program code for suppressing power consumption is transferred from the nonvolatile memory to the volatile memory previously and executed by the system program in some cases.

Here, when all of the execution of the program code in the volatile memory is not allowed, although an illegal program transmitted from the external connection device to the volatile memory of the IC card and stored therein can be prevented from being executed, the process in which the system program has to be executed in the volatile memory as described above cannot be executed.

### SUMMARY OF THE INVENTION

The present invention was made in view of the above problems and it is an object of the present invention to firstly provide a program execution control circuit for controlling the execution of a program code to prevent an illegal program transmitted from an external connection device to a computer system such as an IC card and stored therein, from being executed and to secondly provide a computer system having a memory protection function in which the malicious program is prevented from being executed and the data stored in the computer system such as the IC card can be prevented from being erased, altered, leaked or the like.

A program execution control circuit according to the present invention in order to attain the above objects is characterized as first characteristics by controlling a computer system comprising a CPU capable of executing a first computer program and a second computer program, a communication circuit capable of receiving data transmitted from an external connection device, a first memory area for storing the first and second computer programs, and a second memory area including a storage area for the first computer program, a storage area for the data received by the communication circuit, and a storage area for data used when the CPU executes a program, such that in a case where it is recognized that a program to be executed by the CPU is the first computer program, when a program code of the program is stored in the first memory area or the storage area for the first computer program in the second memory area, the program is allowed to be executed, and when the program code is stored in the second memory area other than the storage area for the first computer program therein, the program is not allowed to be executed.

According to the program execution control circuit having the first characteristics, since the data received from the external connection device and stored in a predetermined area of the second memory area during the execution of the first computer program is not allowed to be executed as the program code, even when a malicious program code is contained in the received data, the data can be prevented from being altered or read illegally. In addition, since the data stored in the storage area in the second memory area allotted for the first computer program only can be executed as the program code during the execution of the fist computer program, the process required to execute the first computer program in the second memory area can be performed.

Furthermore, in addition to the first characteristics, the program execution control circuit according to the present invention is characterized as second characteristics by performing control such that in a case where it is recognized that a program to be executed by the CPU is the second computer program, when a program code of the program is stored in the first memory area, the program is allowed to be executed, and when the program code is stored in the second memory area, the program is not allowed to be executed.

According to the program execution control circuit having the second characteristics, since the data received from the external connection device and stored in the second memory area during the execution of the second computer program is not allowed to be executed as a program code, even when a malicious program code is contained in the received data, the data can be prevented from being altered or read illegally. In addition, the second computer program can be prevented from erroneously executing the first computer program stored in the second memory area.

Furthermore, in addition to the second characteristics, the program execution control circuit according to the present invention is characterized as third characteristics by comprising a flag for determining whether a program to be executed by the CPU is the first computer program or the second computer program, a boundary address register for storing a boundary address of the storage area for the first computer program in the second memory area, and an address comparator for comparing an address of the first or second memory area specifying where a program code of the program is stored with the boundary address stored in the boundary address register and determining whether the program code is stored in the storage area for the first computer program in the second memory area or not. When the flag shows that the program be executed by the CPU is the first computer program and the address comparator determines that the program code is stored in the storage area for the first computer program in the second memory area, the program execution control circuit outputs a readout control signal to the second memory area during an instruction fetch period for reading the program code from the first or second memory area, and when the flag shows that the program to be executed by the CPU is the second computer program or the address comparator determines that the stored place is stored in the second memory area other than the storage area for the first computer program therein, it does not output the readout control signal to the second memory area during the instruction fetch period.

According to the program execution control circuit having the third characteristics, the program execution control circuit having the first or second characteristics can be specifically implemented.

A computer system according to the present invention in order to attain the above objects is characterized as first characteristics by comprising the program execution control circuit according to any one of the above first to third characteristics, a CPU capable of executing a first computer program and a second computer program, a communication circuit capable of receiving data transmitted form an external connection device, a first memory area capable of storing the first and second computer programs, and a second memory area including a storage area for the first computer program, a storage area for the data received by the communication circuit, and a storage area for data used when the CPU executes a program.

Furthermore, addition to the first characteristics, the computer system according to the present invention is characterized as second characteristics in that the first memory area comprises a nonvolatile memory and the second memory area comprises a volatile memory

Still furthermore, in addition to the first or second characteristics, the computer system according to the present invention is characterized as third characteristics in that the program execution control circuit is the program execution control circuit having the third characteristics, and a system program and an application program are stored as the first computer program and the second computer program in the first memory area respectively, and the system program is started after the CPU has been reset, and comprises a first step of setting the boundary address in the boundary address register provided in the program execution control circuit, a second step of setting the flag provided in the program execution control circuit to a state such that a program to be executed by the CPU is the first computer program, and a third step of storing a part or all of the system program in the storage area for the first computer program in the second memory area.

Furthermore, in addition to the third characteristics, the computer system according to the present invention is characterized as fourth characteristics in that the system program further comprises a fourth step of determining whether the communication circuit receives command data transmitted from the external connection device or not, a fifth step of storing the command data in the storage area of the data received by the communication circuit in the second memory area when it is determined that the command data is received at the fourth step, a sixth step of determining whether the command data is a start command of the application program or not, a seventh step of setting the flag in a state such that the program to be executed by the CPU is the second computer program when it is determined that the command data is the start command of the application program at the sixth step, an eighth step of starting the application program, and a ninth step of setting the flag in a state such that the program to be executed by the CPU is the first computer program after the application program has been completed.

Furthermore, in addition to the fourth characteristics, the computer system according to the present invention is characterized as fifth characteristics in that after the application program has been started at the eighth step of the system program, the application program has a first step of determining whether the communication circuit receives command data transmitted from the external connection device or not, a second step of storing the command data in the storage area for the data received by the communication circuit in the second memory area when it is determined that the command data is received at the first step, a third step of determining whether the command data is an end command of the application program or not, and a fourth step of moving an operation to the ninth step of the system program when it is determined that the command data is the end command of the application program at the third step.

Furthermore, in addition to the fourth or fifth characteristics, the computer system according to the present invention is characterized as sixth characteristics in that the system program further comprises a tenth step of determining whether the system program to be executed is stored in the storage area for the first computer program in the second memory area or not when it is determined that the command data is the start command of the system program at the sixth step, a step of executing the system program stored in the storage area for the first computer program in the second memory area when it is determined that the system program is stored in the storage area for the first computer program in the second memory area at the tenth step, and a step of executing the system program stored in the first memory area when it is determined that the system program is not stored in the storage area for the first computer program in the second memory area at the tenth step.

According to the computer system having the above each characteristics, since the data received from the external connection device and stored in the predetermined area of the second memory area while the first or second computer program is executed is not allowed to be executed as the program code, even when a malicious program code is contained in the received data, the data can be prevented from being altered or read illegally.

Furthermore, an IC card according to the present invention is characterized by comprising the computer system having any one of the above characteristics.

According to the IC card having the above characteristics, a malicious program transmitted from the external connection device to the IC card and stored therein is prevented from being executed and the data stored in the IC card can be prevented from being erased, altered, leaked or the like.

### BRIEF DESCRIPTION OF THE DRAWINGS

Fig. 1 is a block diagram showing the system constitution example of a computer system according to one embodiment of the present invention;
Fig. 2 is a circuit diagram showing the circuit constitution example of a program execution control circuit according to one embodiment of the present invention;
Fig. 3 shows memory maps briefly showing a control state by the operation of the program execution control circuit according to one embodiment of the present invention;
Fig. 4 is a flowchart for explaining a process procedure of a system program of the computer system according to one embodiment of the present invention;
Fig. 5 is a flowchart for explaining an execution process of an application program during the process procedure in the system program shown in Fig. 4;
Fig. 6 is a view for explaining the basic system constitution of an IC card;
Fig. 7 is a view for explaining the flow of the basic command of the IC card;
Fig. 8 is a view for explaining the data structure of a command APDU and a response APDU of the IC card; and
Fig. 9 is a flowchart showing a conventional method for preventing a malicious program received from the outside from being executed.

### DETAILED DESCRIPTION OF THE INVENTION

An embodiment of a program execution control circuit and a computer system according to the present invention (referred to as the "circuit of the present invention" and the "system of the present invention" occasionally hereinafter) will be described with reference to the drawings hereinafter.

According to this embodiment, it is assumed that the circuit of the present invention is applied to a computer system comprising a CPU (Central Processing Unit), a communication circuit that can receive data transmitted from an external connection device, a nonvolatile memory and a volatile memory, and the system of the present invention is provided as an IC card incorporating one or more IC chips comprising components of the computer system and the circuit of the present invention in a plastic card.

Similar to the conventional example, the basic system of the IC card according to this embodiment has the constitution shown in Fig. 6. A terminal PC 21 and an IC card reader/writer 22 communicate with an IC card 20 as an external connection device 23 using a contact-type interface or a noncontact-type interface. As shown in Fig. 7, commands are exchanged between the external connection device 23 and the IC card 20 in Fig. 6 such that a command APDU 24 is sent from the external connection device 23 to the IC card 20 and its processed result with respect to the command APDU 24 is sent from the IC card 20 to the external connection device 23 as a response APDU 25 like the conventional case.

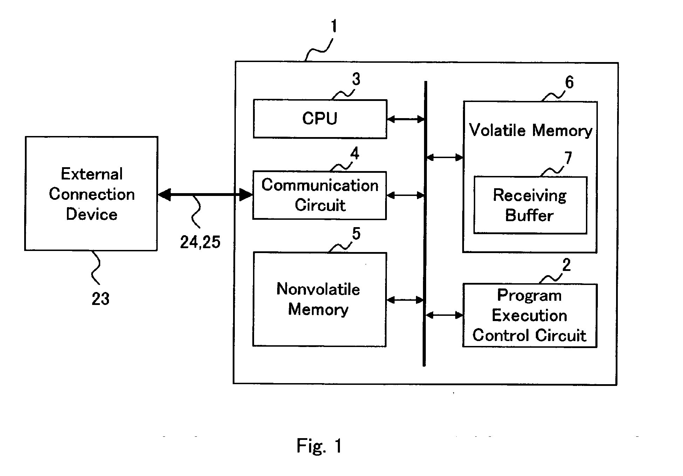

Fig. 1 shows the further detailed constitution of the system of the present invention (corresponding to the IC card 20 shown in Fig. 6). The system 1 of the present invention comprises a CPU 3, a communication circuit 4, a nonvolatile memory 5, a volatile memory 6, and a circuit 2 of the present invention.

The CPU 3 performs a process in the IC card by reading a program code stored in the nonvolatile memory 5 and the volatile memory 6.

The communication circuit 4 is a communication interface circuit for transmitting and receiving data to and from the external connection device 23, more specifically, for receiving the command APDU and transmitting the response APDU and it provides a contact-type interface or a noncontact-type interface.

The nonvolatile memory 5 comprises a semiconductor nonvolatile memory such as a flash memory and the volatile memory 6 comprises a semiconductor random access memory such as a SRAM or DRAM. The address area of the nonvolatile memory 5 provides a first memory area and the address area of the volatile memory 6 provides a second memory area different from the first memory area and the CPU 3 can access both memory areas.

The program code of a system program of the IC card (corresponding to a first computer program) and the program code of an application program of the IC card (corresponding to a second computer program) are stored in the first memory area provided by the nonvolatile memory 5.

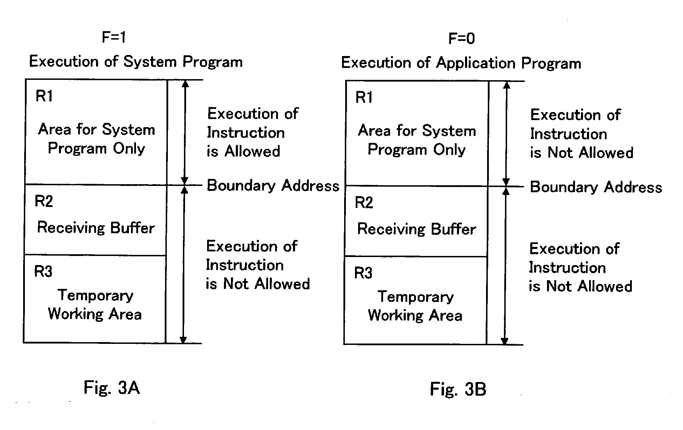

As shown in Fig. 3, the second memory area provided by the volatile memory 6 is divided into a storage area R1 for the program code of the system program only, a receiving buffer 7 (R2) that is a storage area for data (command APDU) received by the communication circuit 4, and a data storage area (temporary working area) R3 used in reading and writing data when the CPU 3 executes the system program or the application program. The program code that has to be executed in the second memory area in the system program is stored in the storage area R1 for the program code of the system program only in the second memory area. The process to be executed in the program code includes a process for data writing in the nonvolatile memory 5 and the like.

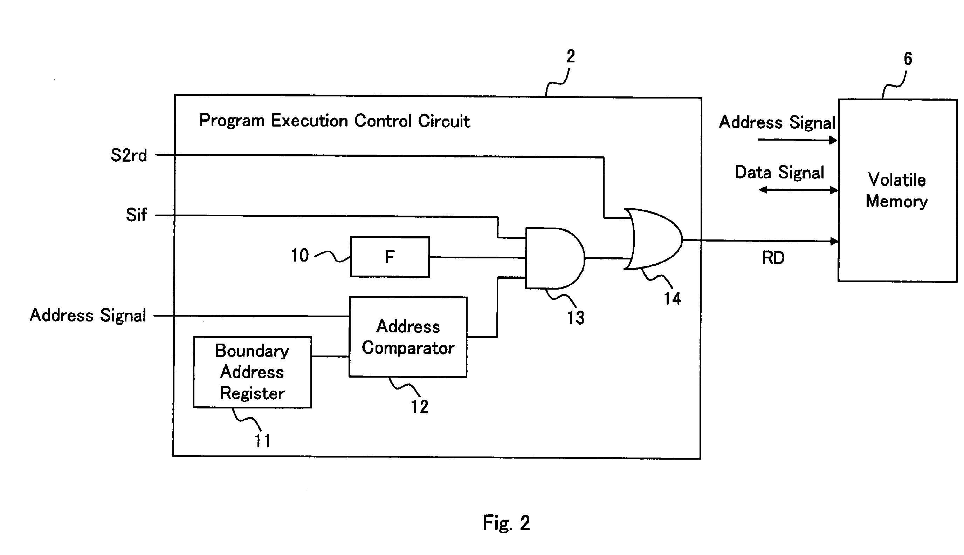

The circuit 2 of the present invention controls whether the CPU 3 can execute the program code stored in the second memory area provided in the volatile memory 6. The constitution and operation of the circuit 2 of the present invention will be described with reference to Fig. 2.

Fig. 2 is a circuit diagram showing one circuit constitution example of the circuit 2 of the present invention. As shown in Fig. 2, the circuit 2 of the present invention comprises a flag 10, a boundary address register 11, an address comparator 12, an AND circuit 13, and an OR circuit 14. The circuit 2 of the present invention controls whether the program code can be read from the volatile memory 6 or not in order to allow or not to allow the program code stored in the second memory area to be executed by the CPU 3 shown in Fig. 1.

The flag 10 stores 1-bit identifier F for identifying whether the object to be executed by the CPU 3 is the system program or the application program. When the identifier F stored in the flag 10 is "logical value 1" (represented by just "1" hereinafter), it means that the system program is being executed or just before it is executed and when the identifier F is "logical value 0" (represented by just "0" hereinafter), it means that the application program is being executed or just before it is executed. In addition, the setting of the identifier F to the flag 10 is executed by the system program by the CPU 3 as will be described below.

The boundary address register 11 stores a boundary address of the storage area R1 for the system program only in the second memory area. More specifically, when the second memory area is divided such that the storage area R1 (address area) for the system program only in the second memory area is positioned lower side from the address area of the receiving buffer R2 and the temporary working area R3, the boundary address is the most significant address of the storage area R1 or the least significant address of the storage areas R2 or R3.

The address comparator 12 receives an address signal and the boundary address stored in the boundary address register 11 and compares the address values and determines whether the address value of the address signal that specifies the stored place of the program code to be executed is in the storage area R1 for the system program only in the second memory area or not. When the address value of the address signal is in the storage area R1 for the system program only in the second memory area, "1" is outputted and when it is not in the storage area R1 (that is, it is in the storage area R2 or R3), "0" is outputted. More specifically, when it is assumed that the second memory area is divided such that the storage area R1 for the system program only in the second memory area is positioned on the lower side from the receiving buffer R2 or the temporary working area R3, and the boundary address is specified by the most significant address of the storage area R1, "1" is outputted in a case where the address value of the address signal is equal to the address value of the boundary address or less, and "0" is outputted in a case where the address value of the address signal is more than the address value of the boundary address.

The AND circuit 13 has three inputs, to which the output of the flag 10 (identifier F), the output of the address comparator 12 and an instruction fetch signal Sif are inputted and its output is inputted to the OR circuit 14. The instruction fetch signal Sif is a readout control signal that is outputted during an instruction fetch period when the CPU 3 reads the program code stored in the first or second memory area. The instruction fetch signal Sif becomes an activated state at "1".

The OR circuit 14 has two inputs, to which the output of the AND circuit 13 and a second readout control signal S2rd are inputted and its output is inputted to the volatile memory 6 as a readout control signal RD for the volatile memory 6. The second readout control signal S2rd is a readout control signal outputted when the CPU 3 fetches the program code and reads the data stored in the second memory area at the time of executing the fetched instruction. The second readout control signal S2rd becomes an activated state at "1".

Thus, when all of the inputs of the AND circuit 13 are "1" or the second readout control signal S2rd is "1", the readout control signal RD becomes "1" and activated. Here, focusing on the case where it is controlled whether the CPU 3 can read the program code from the volatile memory 6 or not, since the signal level of the second readout control signal S2rd is "0", the state of the readout control signal RD is determined by the signal level of each input of the AND circuit 13 substantially. That is, when the identifier F of the flag 10 is "1" and the object to be executed by the CPU 3 is the system program, and the output of the address comparator 12 is "1" and the program code of the system program to be executed is in the storage area R1 for the system program only in the second memory area, the readout control signal RD is outputted in synchronization with the instruction fetch signal Sif and the program code stored in the storage area R1 for the system program only in the second memory area is allowed to be read.

In addition, when the identifier F of the flag 10 is "0" and the object to be executed by the CPU 3 is the application program, the readout control signal RD is not activated regardless of the stored place of the program code to be executed and the program code is not allowed to be read. Furthermore, even when the identifier F of the flag 10 is "1" and the object to be executed by the CPU 3 is the system program, if the output of the address comparator 12 is "0" and the program code to be executed is not in the storage area R1 for the system program only in the second memory area, the program code is not allowed to be read similarly

Fig. 3 shows memory maps summarizing the control state by the operation of the circuit of the present invention and showing the execution allowed or execution prohibited state of the program code according to the identifier F of the flag 10 and an address specifying the stored place of the program code to be executed. In Fig. 3, the memory map when the system program is being executed, that is, when the identifier F is "1" is arranged on the left side (Fig. 3A) and the memory map when the application program is being executed, that is, when the identifier F is "0" is arranged on the right side (Fig. 3B).

As shown in Fig. 3, when the identifier F of the flag 10 is "1", the program code is allowed to be executed in the storage area R1 for the system program only and the program code is not allowed to be executed in the receiving buffer R2 and the temporary working area R3. In addition, when the identifier F of the flag 10 is "0", the program code is not allowed to be executed in the entire second memory area (R1, R2 and R3).

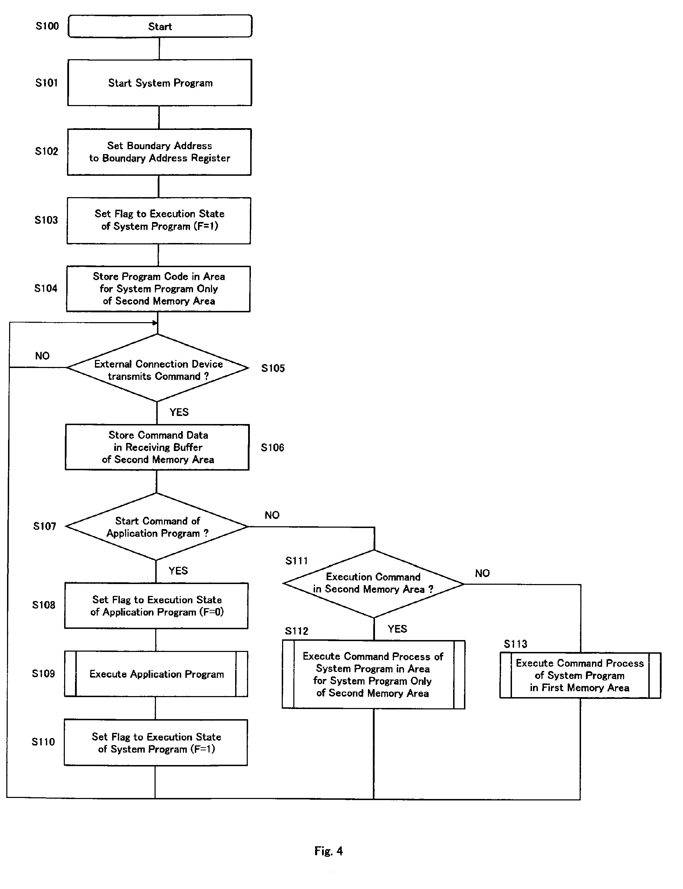

Next, the executing operation of the system of the present invention including the control for the circuit 2 of the present invention will be described with reference to a flowchart shown in Fig. 4.

First, when the CPU 3 is reset, the program counter in the CPU 3 is set to an initial address just after reset, that is, a head address of the system program of the nonvolatile memory 5 (first memory area) at step S100.

Then, the system program stored in the first memory area is started to be executed at step S101.

Then, the boundary address is set in the boundary address register 11 of the circuit 2 of the present invention by the execution of the system program by the CPU 3 at step S102.

Then, "1" is set in the flag 10 of the circuit 2 of the present invention by the execution of the system program, so that the execution state of the system program can be identified at step S 103.

Then, the necessary program code is transferred from the first memory area to the storage area R1 for the system program only in the second memory area and stored therein by the execution of the system program at step S104.

After the executions of the system program from the steps S101 to S104, as shown in the memory map in Fig. 3A, the circuit 2 of the present invention becomes a control state in which the program code can be allowed to be executed in the storage area R1 for the system program only in the second memory area.

Then, it is determined whether the command APDU is transmitted from the external connection device 23 to the communication circuit 4 or not by the execution of the system program at step S 105.

When the command APDU is transmitted at the step S 105 (YES), the operation is moved to step S 106 by the execution of the system program and the command APDU is stored in the receiving buffer (R2) 7 in the second memory area. Since then, even when the command APDU stored in the receiving buffer 7 is a malicious program code, as shown in the memory map in Fig. 3A, since the program code is not allowed to be executed in the receiving buffer (R2) 7, the program code is prevented from being executed illegally. In addition, when the command APDU is not transmitted at the step S105 (NO), the determining operation at the step S105 is repeated.

Then, the contents of the command APDU stored in the receiving buffer (R2) 7 at the step S106 is determined by the execution of the system program at step S107. When the command APDU is the start command of the application program at the step S107 (YES), the operation is moved to step S108 and when it is not (when it is the start command of the system program) (NO), the operation is moved to step S111.

At step S108, when"0" is set in the flag 10 of the circuit 2 of the present invention by the execution of the system program, the execution state of the application program can be identified. By the process at the step S108, the circuit 2 of the present invention becomes the control state in which the program code is not allowed to be executed in the second memory area as shown in the memory map in Fig. 3B.

Then, the application program is executed by the CPU 3 at step S109.

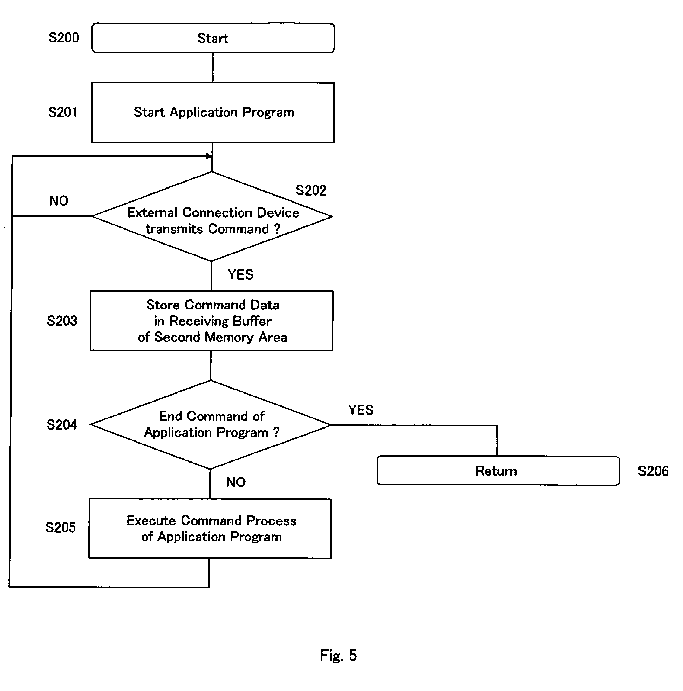

Here, the execution process of the application program at the step S109 will be described with reference to a flowchart shown in Fig. 5.

First, a subroutine for the execution process of the application program shown in Fig. 5 is called by the execution of the system program at the step S109. Thus, the program counter of the CPU 3 is set at the head address of the application program in the first memory area at step S200 and the application program stored in the first memory area is started at step S201.

Then, it is determined whether the command APDU is transmitted from the external connection device 23 to the communication circuit 4 or not by the execution of the application program at step S202.

When the command APDU is transmitted at the step S202 (YES), the operation is moved to step S203 and the command APDU is stored in the receiving buffer (R2) 7 in the second memory area by the execution of the application. Since then, even when the command APDU stored in the receiving buffer 7 is a malicious program code, as shown in the memory map in Fig. 3B, since the program code is not allowed to be executed in the receiving buffer (R2) 7, the program code is prevented from being executed illegally. Furthermore, since the program code is not allowed to be executed in the storage area R1 for the system program only and the temporary working area R3 in the second memory area, the program code stored in the second memory area can be prevented from being executed erroneously from the application program. In addition, when the command APDU is not transmitted at the step S202 (NO), the determining operation at the step S202 is repeated.

Then, the contents of the command APDU stored in the receiving buffer (R2) 7 at the step S203 is determined by the execution of the application program at step S204. When the command APDU is the end command of the application program at the step S204 (YES), the operation is moved to step S206 and when it is not (NO), the operation is moved to step S205 and the application program is continued to be executed.

When the operation is moved to the step S206, it returns from the subroutine to the step S110 in the main routine shown in Fig. 4.

By the execution of the system program, "1" is set to the flag 10 of the circuit 2 of the present invention at the step S 110 and the execution state of the system program can be identified. By the execution process at the step S110, the circuit 2 of the present invention returns to the control state in which the program code is allowed to be executed in the storage area R1 for the system program only in the second memory area as shown in the memory map in Fig. 3A.

When the operation is moved to step S111 because the command APDU is not the start command of the application program but the start command of the system program according to the determination at the step S107, the contents of the command APDU stored in the receiving buffer (R2) 7 at the step S106 is determined by the execution of the system program and when the command APDU is the start command of the system program stored in the second memory area (YES), the-operation is moved to step S112 and when it is not, the operation is moved to step S 113.

The command process of the system program required to be executed in the second memory area is executed in the storage area R1 for the system program only in the second memory area at the step S112. Meanwhile, the command process of the system program is executed in the first memory area at the step S113.

As described above, the circuit 2 of the present invention and the system 1 of the present invention can provide a memory protection function in which a malicious program transmitted from the external connection device 23 to the volatile memory of the system 1 of the present invention and stored therein can be surely prevented from being executed, the program code of the volatile memory area allotted to the system program can be executed while the system program of the IC card is being executed, and the program code in the entire area of the volatile memory is not allowed to be executed while the application program of the IC card is being executed, so that the data stored in the IC card can be prevented from being erased, altered or leaked.

### (Another embodiment)

Next, another embodiment of the present invention will be described.
(1) Although it is assumed that the system 1 of the present invention is provided as the IC card incorporating one or more IC chips comprising the CPU 3, the communication circuit 4, the nonvolatile memory 5, the volatile memory 6, and the circuit 2 of the present invention in a plastic card according to the above embodiment, the system 1 of the present invention is not always limited to the IC card.
(2) In addition, when the system 1 of the present invention comprises the plurality of IC chips, in a case where the CPU 3 and the volatile memory 6 are comprised in different IC chips respectively, the circuit 2 of the present invention may be comprised in an IC chip other than the IC chips comprising the CPU 3 and the volatile memory 6 or may be formed in the IC chip of the CPU 3 or the volatile memory 6.
(3) Although one circuit constitution example of the circuit 2 of the present invention is illustrated in Fig. 2 according to the above embodiment, the circuit 2 of the present invention is not limited to the circuit constitution shown in Fig. 2. In addition, although it is assumed that the activated state of the input and output signals of the circuit 2 of the present invention is defined by the "logic value 1" in the above embodiment, the activated state of a part or all of the signal may be specified by a "logic value 0". In addition, definition of each of the logic values of the identifier F of the flag 10 and the output of the address comparator 12 is not limited to the above embodiment. Therefore, the circuit constitution of the circuit 2 of the present invention is appropriately varied according to the definition of the logic value of each signal.

The program execution control circuit and the computer system according to the present invention can be applied to a computer system such as an IC card having a communication interface with an external connection device.

## Claims

1. A program execution control circuit controlling a computer system,
the computer system comprising a CPU capable of executing a first computer program and a second computer program, a communication circuit capable of receiving data transmitted from an external connection device, a first memory area for storing the first and second computer programs, and a second memory area including a storage area for the first computer program, a storage area for the data received by the communication circuit, and a storage area for data used when the CPU executes a program,
the program execution control circuit controlling the computer system such that, in a case where it is recognized that a program to be executed by the CPU is the first computer program,
the program is allowed to be executed when a program code of the program is stored in the first memory area or the storage area for the first computer program in the second memory area, and the program is not allowed to be executed when the program code is stored in the second memory area other than the storage area for the first computer program therein.

2. The program execution control circuit according to claim 1 controlling such that, in a case where it is recognized that a program to be executed by the CPU is the second computer program,
the program is allowed to be executed when a program code of the program is stored in the first memory area, and the program is not allowed to be executed when the program code is stored in the second memory area.

3. The program execution control circuit according to claim 2 comprising:
a flag for determining whether a program to be executed by the CPU is the first computer program or the second computer program;
a boundary address register for storing a boundary address of the storage area for the first computer program in the second memory area; and
an address comparator for comparing an address of the first or second memory area specifying where a program code of the program is stored with the boundary address stored in the boundary address register and determining whether the program code is stored in the storage area for the first computer program in the second memory area or not,
the program execution control circuit outputting a readout control signal to the second memory area during an instruction fetch period for reading the program code from the first or second memory area when the flag shows that the program to be executed by the CPU is the first computer program and the address comparator determines that the program code is stored in the storage area for the first computer program in the second memory area, and
the program execution control circuit not outputting the readout control signal to the second memory area during the instruction fetch period when the flag shows that the program to be executed by the CPU is the second computer program or the address comparator determines that the program code is stored in the second memory area other than the storage area for the first computer program therein.

4. A computer system comprising:
a CPU capable of executing a first computer program and a second computer program, a communication circuit capable of receiving data transmitted form an external connection device, a first memory area, and a second memory area,
**characterized in that**
the first memory area can store the first and second computer programs,
the second memory area including a storage area for the first computer program, a storage area for the data received by the communication circuit, and a storage area for data used when the CPU executes a program, and
the computer system comprises the program execution control circuit according to any one of claims 1 to 3.

5. The computer system according to claim 4, wherein
the first memory area comprises a nonvolatile memory and the second memory area comprises a volatile memory

6. The computer system according to claim 4 or 5, wherein
the program execution control circuit is the program execution control circuit according to claim 3,
a system program and an application program are stored as the first computer program and the second computer program in the first memory area respectively,
the system program is started after the CPU has been reset, and comprises
a first step of setting the boundary address in the boundary address register provided in the program execution control circuit,
a second step of setting the flag provided in the program execution control circuit to a state such that a program to be executed by the CPU is the first computer program, and
a third step of storing a part or all of the system program in the storage area for the first computer program in the second memory area.

7. The computer system according to claim 6, wherein
the system program further comprises
a fourth step of determining whether the communication circuit receives command data transmitted from the external connection device or not,
a fifth step of storing the command data in the storage area for data received by the communication circuit in the second memory area when it is determined that the command data is received at the fourth step,
a sixth step of determining whether the command data is a start command of the application program or not,
a seventh step of setting the flag to a state such that the program to be executed by the CPU is the second computer program when it is determined that the command data is the start command of the application program at the sixth step,
an eighth step of starting the application program, and
a ninth step of setting the flag in a state such that the program to be executed by the CPU is the first computer program after the application program has been completed.

8. The computer system according to claim 7, wherein
the application program comprises
a first step of determining whether the communication circuit receives command data transmitted from the external connection device or not after the application program has been started at the eighth step of the system program,
a second step of storing the command data in the storage area for data received by the communication circuit in the second memory area when it is determined that the command data is received at the first step,
a third step of determining whether the command data is an end command of the application program or not, and
a fourth step of moving an operation to the ninth step of the system program when it is determined that the command data is the end command of the application program at the third step.

9. The computer system according to claim 7 or 8, wherein
the system program further comprises
a tenth step of determining whether the system program to be executed is stored in the storage area for the first computer program in the second memory area or not when it is determined that the command data is the start command of the system program at the sixth step,
a step of executing the system program stored in the storage area for the first computer program in the second memory area when it is determined that the system program is stored in the storage area for the first computer program in the second memory area at the tenth step, and
a step of executing the system program stored in the first memory area when it is determined that the system program is not stored in the storage area for the first computer program in the second memory area at the tenth step.

10. An IC card comprising the computer system according to any one of claims 4 to 9.
